# EUROPEAN PATENT APPLICATION

(11) **EP 4 524 530 A1**
(43) Date of publication of application: **19.03.2025**
(21) Application number: 24171971.5
(22) Date of filing: 23.04.2024
(51) Int. Cl.: G01K 1/14, H01M 10/48, H01M 10/637, H01M 50/284, H01M 50/519, H01M 50/569

(54) **BATTERY MODULE**

(30) Priority: 15.09.2023 KR 20230122976
(71) Applicant: Samsung SDI Co., Ltd., Yongin-si, Gyeonggi-do 17084 (KR)
(72) Inventor: Lee, Hyeok, 16678 Suwon-si, Gyeonggi-do (KR)
(74) Representative: Gulde & Partner

(57) **Abstract**

A battery module is provided. In an example embodiment, a battery module includes: a battery cell (100), a bus bar holder (200) disposed to face the battery cell (100), a first substrate (300) seated on the bus bar holder (200), a second substrate (400) extending from the first substrate (300), and including a first surface (401) facing the battery cell (100) and a second surface (402) opposite to the first surface (401), a detection member (500) installed on the second surface (402) and configured to detect a temperature of the battery cell (100), a support member (600) installed on the first surface (401) and in contact with the battery cell (100), and a pressing member (700) connected to the bus bar holder (200) and configured to press the support member (600) toward the battery cell (100).

## Description

### BACKGROUND

### 1. Field

Aspects of embodiments of the present disclosure relate to a battery module.

### 2. Description of the Related Art

Unlike primary batteries that are not designed to be (re)charged, secondary (or rechargeable) batteries are batteries that are designed to be discharged and recharged. Low-capacity secondary batteries may be used in portable, small electronic devices, such as smartphones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is provided for enhancement of understanding of the background of the present disclosure, and, therefore, it may contain information that does not constitute related (or prior) art.

### SUMMARY

An aspect of embodiments of the present disclosure is directed to providing a battery module capable of stably fixing a position of a temperature sensor.

These and other aspects and features of the present disclosure will be described in or will be apparent from the following description of some embodiments of the present disclosure.

According to one or more embodiments, a battery module includes: a battery cell, a bus bar holder disposed to face the battery cell, a first substrate seated on the bus bar holder, a second substrate extending from the first substrate, and including a first surface facing the battery cell and a second surface opposite to the first surface, a detection member installed on the second surface and configured to detect a temperature of the battery cell, a support member installed on the first surface and in contact with the battery cell, and a pressing member connected to the bus bar holder and configured to press the support member toward the battery cell.

The second substrate may be a flexible printed circuit board.

The second substrate may be provided in plural (i.e., the second substrate may be a plurality of second substrates), and the plural of second substrates may be arranged in a length direction of the first substrate.

The second substrate may include an extension part of which one side is connected to the first substrate and the other side (i.e., there may be two sides, specifically a first and a second side) protrudes to the outside of the first substrate, and a mounting part connected to the other side of the extension part and configured to support the detection member and the support member.

An insertion hole may be formed in the bus bar holder, and the mounting part may be inserted in the insertion hole.

The detection member may include a temperature sensor fixed to the second surface, and a coating layer disposed to surround the temperature sensor.

The support member may include a support plate fixed to the first surface, and a contact member protruding from the support plate toward the battery cell and in contact with the battery cell.

The contact member may be provided to be elastically deformable.

The contact member may include one or more bridges each having both end portions connected to the support plate and a central portion spaced apart from the support plate.

A side surface of the bridge may be separated (e.g., spaced apart) from the support plate.

The contact member may include one or more flaps each having one end portion connected to the support plate and the other end portion (i.e., there may be two end portions, specifically a first and a second end portion) spaced apart from the support plate.

Each of the flaps may be disposed inclined with respect to the support plate.

The contact member may include one or more contact protrusions each having a curved outer surface.

The contact member may include one or more louvers each of which one surface has a curved shape and the other surface (i.e., there may be two surfaces, specifically a first and a second surface) is open.

The support member may further include a slit formed through the support plate and disposed to face the contact member.

The pressing member may include a first pressing body fixed to the bus bar holder, a second pressing body extending from the first pressing body and having an end portion in contact with the second surface, and a receiving hole formed through the end portion of the second pressing body and in which the detection member is inserted.

The second pressing body may have a cross-sectional area that decreases toward the end portion thereof.

A cross-sectional area of the receiving hole may be greater than a cross-sectional area of the detection member.

In a battery module according to one or more embodiments of the present disclosure, a support member can be brought into close contact with a battery cell by a pressing member, such that a relative position of a detection member with respect to the battery cell may be prevented or substantially prevented from being arbitrarily changed, and temperature detection accuracy may be improved.

In a battery module according to one or more embodiments of the present disclosure, due to a height of a contact member itself, a contact state between a support plate and a battery cell can be maintained even when the support plate and the battery cell are spaced apart from each other by a distance (e.g., a predetermined distance).

In a battery module according to one or more embodiments of the present disclosure, by bringing a contact member having a smaller area than a support plate into contact with the battery cell, a support member can be more firmly brought into close contact with a battery cell.

In a battery module according to one or more embodiments of the present disclosure, a contact member is provided to be elastically deformable, such that adhesion between the contact member and a battery cell may be enhanced, and a contact state between the contact member and the battery cell may be continuously maintained even when an interval between the battery cell and the support plate is changed.

In a battery module according to one or more embodiments of the present disclosure, a space, in which a partial section of a contact member can be inserted in a support plate when the contact member is elastically deformed, can be provided by a slit, such that an interval between the support plate and a battery cell may be prevented or substantially prevented from being excessively increased, and temperature sensor accuracy may be further improved.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is an exploded perspective view schematically illustrating a configuration of a battery module according to a first embodiment of the present disclosure;
FIG. 2 is an enlarged perspective view schematically illustrating a configuration of the battery module illustrated in FIG. 1;
FIG. 3 is a side view schematically illustrating the configuration of the battery module illustrated in FIG. 2;
FIG. 4 is an exploded perspective view schematically illustrating the configuration of the battery module illustrated in FIG. 2;
FIG. 5 is an exploded perspective view illustrating the configuration of the battery module illustrated in FIG. 4 from a different perspective than the view of FIG. 4;
FIG. 6 is a cross-sectional view schematically illustrating a configuration of a detection member according to the first embodiment of the present disclosure;
FIG. 7 is a perspective view schematically illustrating a configuration of a support member according to the first embodiment of the present disclosure;
FIG. 8 is a bottom perspective view schematically illustrating a configuration of the support member illustrated in FIG. 7;
FIGS. 9 and 10 are views schematically illustrating an operation process of the battery module according to the first embodiment of the present disclosure;
FIG. 11 is a perspective view schematically illustrating a configuration of a contact member according to a second embodiment of the present disclosure;
FIG. 12 is a bottom perspective view schematically illustrating a configuration of the contact member illustrated in FIG. 11;
FIGS. 13 and 14 are views schematically illustrating an operation process of a battery module illustrated in FIG. 11;
FIG. 15 is a perspective view schematically illustrating a configuration of a contact member according to a third embodiment of the present disclosure;
FIG. 16 is a bottom perspective view schematically illustrating a configuration of the contact member illustrated in FIG. 15;
FIG. 17 is a perspective view schematically illustrating a configuration of a contact member according to a fourth embodiment of the present disclosure; and
FIG. 18 is a bottom perspective view schematically illustrating a configuration of the contact member illustrated in FIG. 17.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted to have a meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to one or more embodiments of the present disclosure. Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

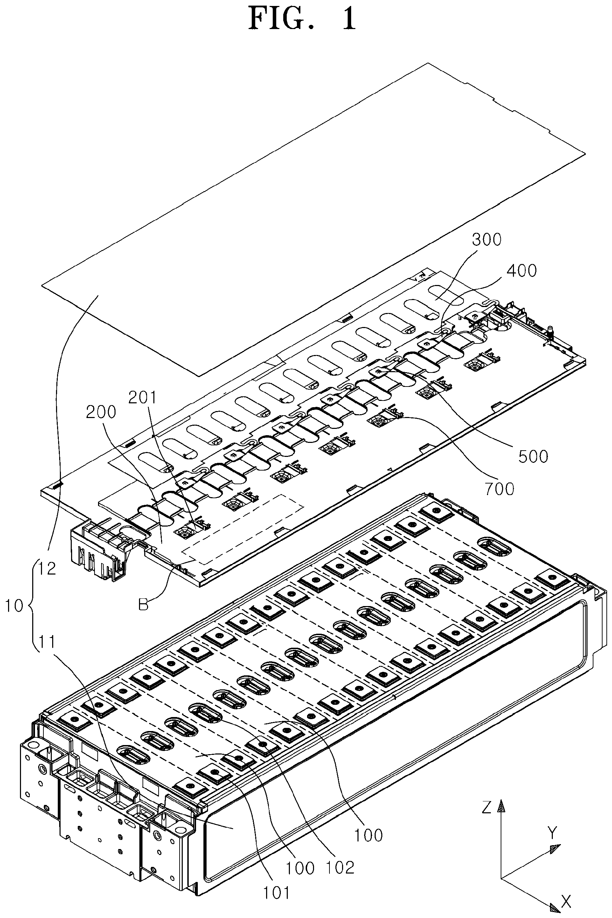

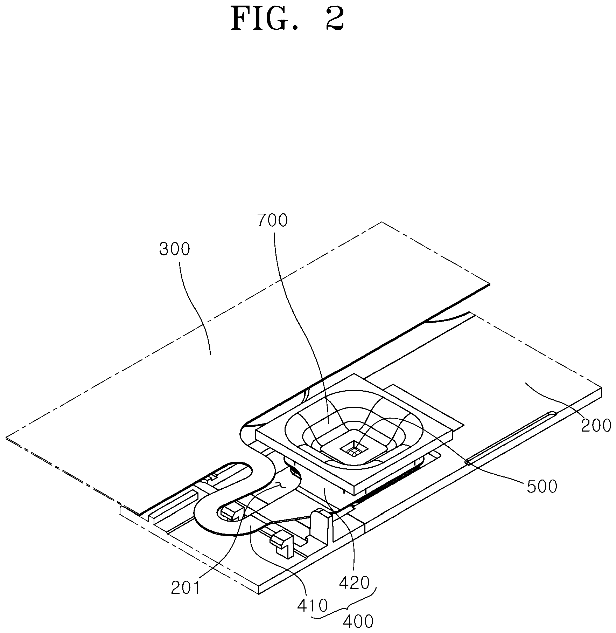

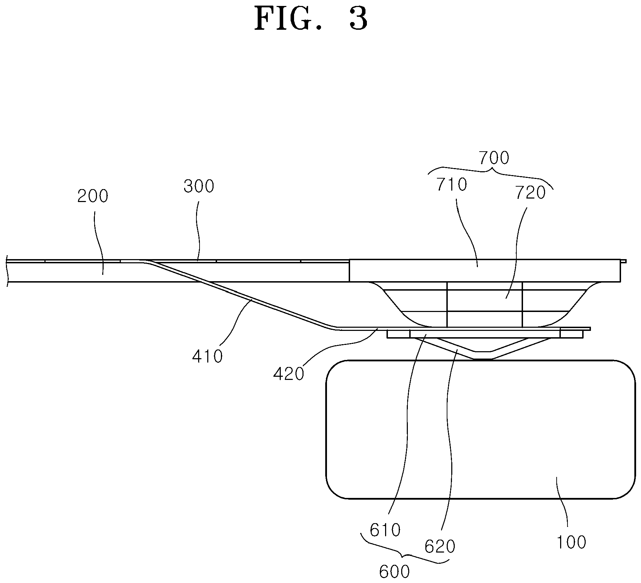

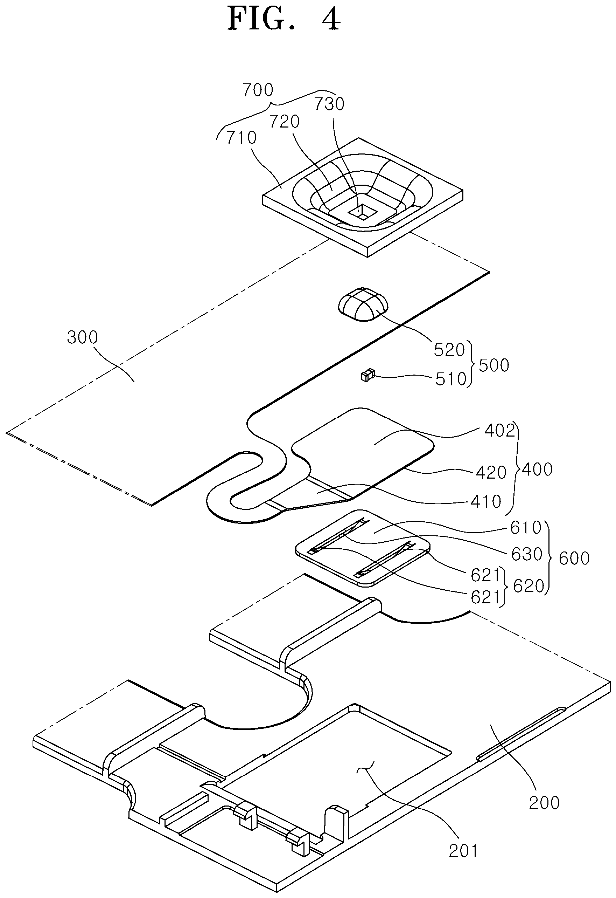

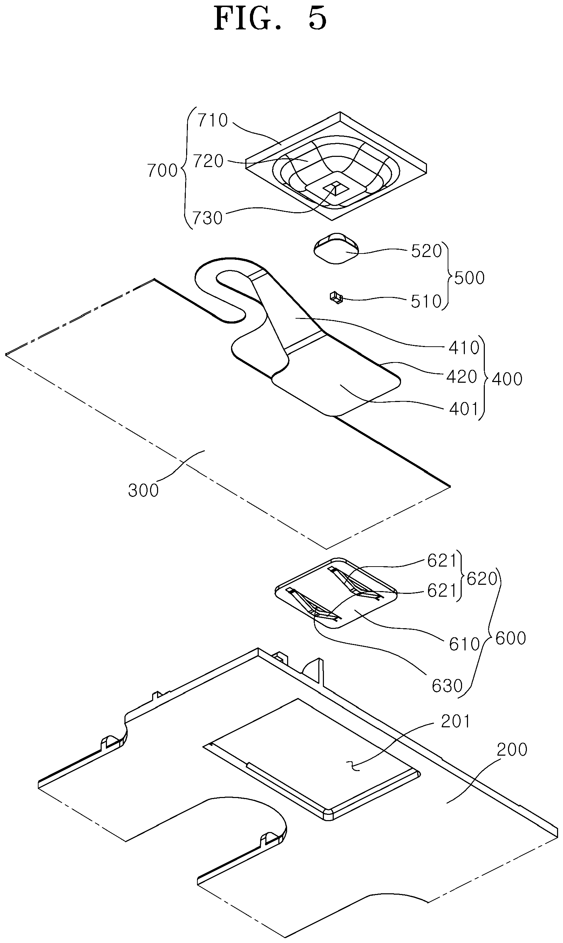

FIG. 1 is an exploded perspective view schematically illustrating a configuration of a battery module according to a first embodiment of the present disclosure, FIG. 2 is an enlarged perspective view schematically illustrating a configuration of the battery module illustrated in FIG. 1, FIG. 3 is a side view schematically illustrating the configuration of the battery module illustrated in FIG. 2, FIG. 4 is an exploded perspective view schematically illustrating the configuration of the battery module illustrated in FIG. 2, and FIG. 5 is an exploded perspective view illustrating the configuration of the battery module illustrated in FIG. 4 from a different viewpoint from that of FIG. 4.

Referring to FIGS. 1 to 5, the battery module according to the present embodiment includes a battery cell 100, a bus bar holder 200, a first substrate 300, a second substrate 400, a detection member 500, a support member 600, and a pressing member 700.

The battery cell 100 may function as a unit structure for storing and supplying power in the battery module. The battery cell 100 may be, as an example, a prismatic secondary battery in which an electrode assembly including a positive electrode plate (not shown) and a negative electrode plate (not shown) on both sides of a separator (not shown) is disposed inside a cell case and is capable of charging and discharging an amount (e.g., a predetermined amount) of power. The electrode assembly may be formed in a wound type in which a separator, a positive electrode plate, and a negative electrode plate are wound in the form of a roll, or in a stacked type in which a separator, a positive electrode plate, and a negative electrode plate are stacked with respect to each other.

A pair of cell terminals 101, which are electrically connected to the electrode assembly, and a vent 102, which is opened as an internal pressure of the battery cell 100 is increased, may be formed in an upper surface of the battery cell 100. The pair of cell terminals 101 may be formed to have different polarities.

A plurality of battery cells 100 may be provided. The plurality of battery cells 100 may be arranged in a direction, for example, in a direction parallel to a Y-axis based on FIG. 1. The adjacent battery cells 100 may be disposed such that respective front and rear surfaces thereof face each other in parallel. However, the number of the battery cells 100 is not limited to that shown in FIG. 1, and various design changes are possible according to the size of the battery module.

The battery cell 100 may be disposed inside a module housing 10 including a housing body 11 having a box shape with an empty interior and an open upper surface, and a housing cover 12 configured to cover the upper surface of the housing body 11. The module housing 10 may perform a function of protecting the battery cell 100 from external foreign substances, impacts, and the like. However, a specific shape of the module housing 10 is not limited to that shown in FIG. 1, and various design changes are possible within a technical concept of a shape that can accommodate the battery cell 100.

The bus bar holder 200 may function as a component that supports (e.g., entirely supports) a bus bar B and the first substrate 300 on the battery cell 100. In an example, the bus bar holder 200 may be formed to have a substantially flat plate shape. A lower surface of the bus bar holder 200 may be disposed to face the battery cell 100, and, more specifically, the upper surface of the battery cell 100, in which the cell terminals 101 and the vent 102 are formed. In an example, an area of the bus bar holder 200 may be greater than a sum of areas of the upper surfaces of the plurality of battery cells 100. The bus bar holder 200 may be supported by being coupled to the housing body 11 or the housing cover 12. In the following description, a length direction of the bus bar holder 200 may refer to a direction in which the plurality of battery cells 100 are arranged, that is, a direction parallel to a Y-axis direction based on FIG. 1, and a width direction of the bus bar holder 200 may refer to a direction parallel to an X-axis direction based on FIG. 1.

The bus bar B configured to electrically interconnect the plurality of battery cells 100 may be installed in the bus bar holder 200. The bus bar B may be, for example, any of various types of bus bars that are in contact with the cell terminals 101 of the battery cells 100 and are electrically connectable with the cell terminals 101. The bus bar B is illustrated in FIG. 1 as being formed as a single bus bar, but is not limited thereto, and a plurality of bus bars B may be formed. In this case, the plurality of bus bars B may have various numbers and arrangement forms according to the number of the plurality of battery cells 100, serial and parallel structures between the plurality of battery cells 100, and the like.

An insertion hole 201 for forming a contact path between the battery cell 100 and the detection member 500 may be formed in the bus bar holder 200. The insertion hole 201 may be formed to have a hole shape vertically passing through the bus bar holder 200. A plurality of insertion holes 201 may be provided. Each of the insertion holes 201 may be disposed to individually face the upper surfaces of the different battery cells 100. The number of the insertion holes 201 may be less than the number of the battery cells 100, or may be the same as the number of the battery cells 100.

The first substrate 300 may be seated on an upper surface of the bus bar holder 200. In an example, the first substrate 300 may be a flexible printed circuit board including conductive patterns (not shown) for conducting electrical current and a flexible insulating film (not shown) for insulating the conductive patterns (not shown). In some examples, the flexible printed circuit board may be referred to as a flexible printed circuit board assembly (FPCA) or a flexible printed circuit board (FPCB). An area of the first substrate 300 may be less than the area of the bus bar holder 200. A length direction of the first substrate 300 may be disposed parallel to the length direction of the bus bar holder 200. The first substrate 300 may be fixed to the upper surface of the bus bar holder 200 by any of various types of fixing means such as an adhesive, a double-sided tape, a bolt, a hook, and the like. In an example, the first substrate 300 may be connected to an external control system such as a battery management system (BMS) through a separate connector (not shown) or the like.

The second substrate 400 may extend from the first substrate 300 and may support the detection member 500. Similar to the first substrate 300, the second substrate 400 may be a flexible printed circuit board including conductive patterns (not shown) for conducting electrical current and a flexible insulating film (not shown) for insulating the conductive patterns (not shown). The second substrate 400 may have a partial region inserted in the insertion hole 201, and may be disposed to directly face the upper surface of the battery cell 100. The second substrate 400 may include a first surface 401 facing the battery cell 100 and a second surface 402 opposite to the first surface 401. In an example, based on FIGS. 1 to 5, the first surface 401 may be a lower surface of the second substrate 400, and the second surface 402 may be an upper surface of a second substrate 400.

A plurality of second substrates 400 may be provided. The plurality of second substrates 400 may be arranged at an interval (e.g., a predetermined interval) in the length direction of the first substrate 300. A number of the plurality of second substrates 400 may be the same as the number of the insertion holes 201. The interval between the adjacent second substrates 400 may be the same as an interval between the adjacent insertion holes 201.

The second substrate 400 may include an extension part 410 and a mounting part 420. A first surface 401 and a second surface 402 of each of the extension part 410 and the mounting part 420 may refer to the same surfaces as the first surface 401 and the second surface 402 of the second substrate 400, respectively.

The extension part 410 may have one side connected to the first substrate 300 and the other side protruding to an outside of the first substrate 300. The extension part 410 may be formed to have a band shape in which an extending direction thereof may be freely changed. A length of the extension part 410 may be greater than a distance between an edge of the first substrate 300 and one insertion hole 201. Accordingly, the extension part 410 may guide the mounting part 420, which will be described later, to be smoothly inserted in the insertion hole 201.

The mounting part 420 may be connected to the other side of the extension part 410 and may support the detection member 500 and the support member 600, which will be described below. That is, the mounting part 420 may refer to a region of the second substrate 400 in which the detection member 500 and the support member 600 are mounted among the entire region of the second substrate 400. The mounting part 420 may be formed to have a substantially flat plate shape. The mounting part 420 may be inserted in the insertion hole 201. In this case, the first and second surfaces 401 and 402 of the mounting part 420 may be disposed to face the upper surface of the battery cell 100 and the lower surface of the bus bar holder 200, respectively. An area of the mounting part 420 may be less than an area of the insertion hole 201.

The detection member 500 is installed on the second substrate 400, more specifically, on the second surface 402 of the mounting part 420, and may detect the temperature of the battery cell 100.

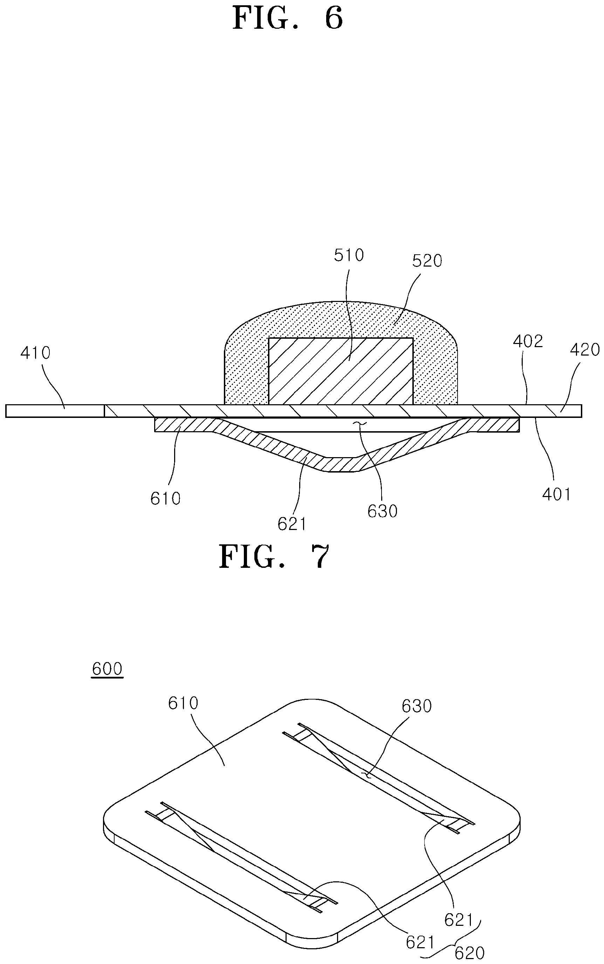

FIG. 6 is a cross-sectional view schematically illustrating a configuration of the detection member according to the first embodiment of the present disclosure.

Referring to FIG. 6, the detection member 500 may include a temperature sensor 510 and a coating layer 520.

The temperature sensor 510 may be exemplified as a thermistor, such as a positive temperature coefficient thermistor (PTC) or negative temperature coefficient thermistor (NTC), that measures temperature using the property that resistance thereof increases or decreases according to a temperature. The temperature sensor 510 may be fixed to the second surface 402 of the mounting part 420. More specifically, the temperature sensor 510 may be solderably coupled to the second surface 402 of the mounting part 420. A detected signal of the temperature sensor 510 may be transmitted to the first substrate 300 sequentially via the mounting part 420 and the extension part 410, and then transmitted to the battery management system (BMS) via the first substrate 300.

The coating layer 520 may be disposed to surround the temperature sensor 510, and may protect the temperature sensor 510 from external moisture, foreign substances, impacts, and the like. The coating layer 520 may be formed to have a substantially dome shape, and may be disposed to surround or entirely surround an upper space of the temperature sensor 510. The coating layer 520 may be formed of a material such as an epoxy resin, acrylic, polyurethane, silicone, parylene, or the like to completely seal the temperature sensor 510 from an external space. The coating layer 520 may be applied to the temperature sensor 510 by a method such as spray, dip coating, or the like.

The support member 600 may be installed on the second substrate 400, more specifically, on the first surface 401 of the mounting part 420. The support member 600 may function as a component that structurally supports the mounting part 420 by its own rigidity in a process in which the temperature sensor 510 is mounted on the second surface 402 of the mounting part 420. In addition, the support member 600 may function as a component that is brought into contact with the battery cell 100 to support the mounting part 420 with respect to the battery cell 100, and at the same time, transfer heat generated from the battery cell 100 to the temperature sensor 510. Accordingly, the support member 600 may be formed of a metal material having high thermal conductivity and rigidity, such as aluminum, nickel, or the like. The support member 600 may be brought into close contact with and fixed to the battery cell 100 by a pressing force applied from the pressing member 700 to be described later.

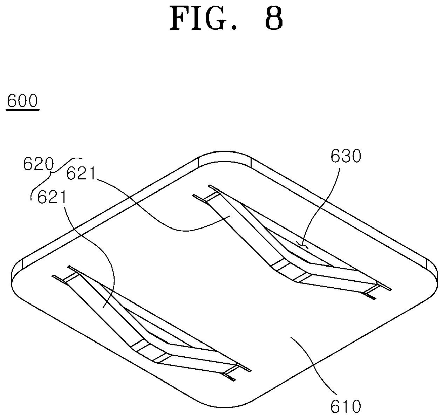

FIG. 7 is a perspective view schematically illustrating a configuration of the support member according to the first embodiment of the present disclosure, and FIG. 8 is a bottom perspective view schematically illustrating a configuration of the support member illustrated in FIG. 7.

Referring to FIGS. 1 to 8, the support member 600 may include a support plate 610 and a contact member 620.

The support plate 610 may be formed to have a substantially flat plate shape. The support plate 610 may be disposed between the first surface 401 of the mounting part 420 and the upper surface of the battery cell 100. An upper surface of the support plate 610 may be fixed to the first surface 401 of the mounting part 420. In this case, the support plate 610 may be fixed to the first surface 401 of the mounting part 420 by any of various types of fixing means, such as an adhesive, double-sided tape, a bolt, a hook, and the like.

The contact member 620 may protrude from the support plate 610 toward the battery cell 100, and may be in contact with the upper surface of the battery cell 100. Accordingly, the support member 600 may maintain a contact state with the battery cell 100 even when the support plate 610 and the battery cell 100 are spaced apart from each other by a distance (e.g., a predetermined distance) due to the height of the contact member 620 itself. In addition, as the contact member 620 having a smaller area than the support plate 610 is brought into contact with the battery cell 100, a magnitude of the pressure per unit area acting between the support member 600 and the battery cell 100 is increased, and the support member 600 may be brought into close contact with the battery cell 100 more firmly.

The contact member 620 may be provided to be elastically deformable. Accordingly, the contact member 620 may be elastically deformed by a pressing force applied from the pressing member 700 to be described later, and may be brought into close contact with the battery cell 100 more firmly, and a contact state between the contact member 620 and the battery cell 100 may be continuously maintained even when an interval between the battery cell 100 and the support plate 610 is changed.

In an example, the contact member 620 may include a bridge 621.

The bridge 621 may have both (or opposite) end portions connected to the support plate 610, and a central portion spaced apart from the support plate 610. A side surface of the bridge 621 may be separated from the support plate 610. Both sides of the bridge 621 may extend to be inclined toward the support plate 610 with respect to the central portion of the bridge 621. That is, the bridge 621 may be formed to have a substantially trapezoidal or arc shape. The central portion of the bridge 621 may be in contact with the upper surface of the battery cell 100. A contact surface of the central portion of the bridge 621, which is directly brought into contact with the battery cell 100, may have a planar shape parallel to the upper surface of the battery cell 100.

In an example, a plurality of bridges 621 may be provided. The plurality of bridges 621 may be disposed to be spaced apart from each other. For example, as shown in FIGS. 7 and 8, the bridges 621 may be formed in a pair, and the pair of bridges 621 may be disposed parallel to each other.

The support member 600 may further include a slit 630.

The slit 630 may be formed to have a hole shape vertically passing through the support plate 610. The slit 630 may be disposed to face the contact member 620, more specifically, the bridge 621. The slit 630 may be disposed such that a length direction thereof is parallel to a straight line connecting both end portions of the bridge 621. That is, both end portions of the bridge 621 may be disposed on inner sides of both end portions of the slit 630, respectively. A number of the slits 630 may be the same as the number of the bridges 621. Each of the slits 630 may be disposed to individually face respective bridges 621. Accordingly, the slit 630 may prevent or substantially prevent an interval between the support plate 610 and the battery cell 100 from excessively increasing, and further improve the accuracy of the temperature sensor 510, by providing a space, in which a partial section of the bridge 621 can be inserted when the bridge 621 is elastically deformed, in the support plate 610.

The pressing member 700 may be connected to the bus bar holder 200 and may press the support member 600 toward the battery cell 100. Accordingly, the pressing member 700 may prevent or substantially prevent a relative position of the detection member 500 with respect to the battery cell 100 from being changed, by bringing the support member 600 into close contact with the battery cell 100.

The pressing member 700 may include a first pressing body 710, a second pressing body 720, and a receiving hole 730.

The first pressing body 710 may form an upper exterior of the pressing member 700, and may be fixed to the bus bar holder 200. The first pressing body 710 may be formed to have a substantially plate shape and disposed to face the insertion hole 201. The first pressing body 710 may be disposed above the insertion hole 201, and may also be disposed inside the insertion hole 201. The first pressing body 710 may be directly fixed to the bus bar holder 200 by welding, bolting, adhesive, double-sided tape, or the like, or may be indirectly fixed to the bus bar holder 200 through a separate bracket (not shown) or the like.

The second pressing body 720 may extend downward from a lower surface of the first pressing body 710 toward the battery cell 100. An end portion of the second pressing body 720 may be in contact with the second substrate 400, more specifically, the second surface 402 of the mounting part 420. As the bus bar holder 200 is seated on an upper side of the battery cell 100, the second pressing body 720 may press the mounting part 420 toward the battery cell 100 and may bring the support member 600 into close contact with the battery cell 100. The second pressing body 720 may be formed to have a narrower cross-sectional area toward the end portion thereof. Accordingly, the second pressing body 720 may increase a magnitude of a pressure per unit area applied to the mounting part 420 to more strongly bring the support member 600 into close contact with the battery cell 100. A cross-sectional shape of the second pressing body 720 may be changed in design to any of various shapes, such as a circular shape, a quadrangular shape, a polygonal shape, and an elliptical shape. An upper surface of the second pressing body 720 may be formed to be open as shown in FIG. 4, or may be formed to be closed.

The receiving hole 730 may be formed to have a hole shape passing through the end portion of the second pressing body 720. An area of the receiving hole 730 may be greater than a cross-sectional area of the detection member 500, more specifically, the coating layer 520. The detection member 500 may be inserted in the receiving hole 730 as the end portion of the second pressing body 720 is brought into contact with the second surface 402 of the mounting part 420. Accordingly, the receiving hole 730 may prevent or substantially prevent the detection member 500 from being damaged in a process of pressing the mounting part 420 by the second pressing body 720.

Herein, an operation process of the battery module according to the present embodiment will be described.

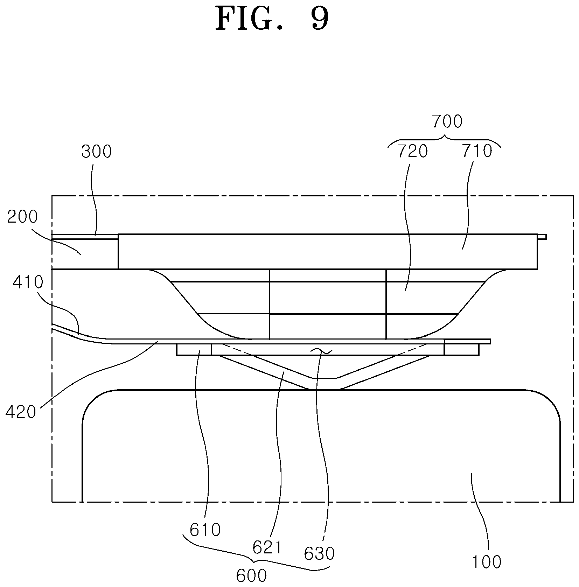

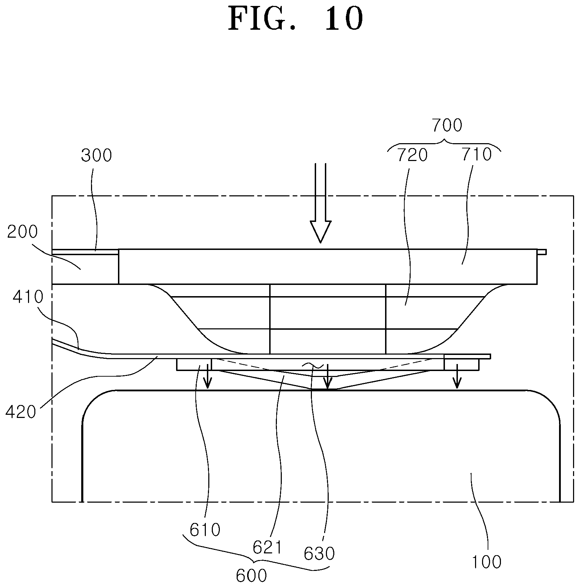

FIGS. 9 and 10 are views schematically illustrating an operation process of the battery module according to the first embodiment of the present disclosure.

Referring to FIGS. 9 and 10, after the plurality of battery cells 100 are installed inside the housing body 11, the bus bar holder 200 may be seated on the upper sides of the battery cells 100.

In this process, the mounting part 420 may be inserted in the insertion hole 201, and a lower surface of the central portion of the bridge 621 may be brought into contact with the upper surface of the battery cell 100.

Thereafter, the bus bar holder 200 is moved toward the upper surface of the battery cell 100, and thus, the end portion of the second pressing body 720 presses the second surface 402 of the mounting part 420 toward the battery cell 100.

A pressing force applied to the mounting part 420 by the second pressing body 720 is transmitted to the bridge 621 sequentially via the mounting part 420 and the support plate 610, and the bridge 621 is elastically deformed in a direction, in which the central portion thereof moves upward, by the pressing force.

The bridge 621 is elastically deformed and strongly brought into close contact with the upper surface of the battery cell 100 by an accumulated elastic restoring force, and the position of the temperature sensor 510 with respect to the battery cell 100 may be fixed by a frictional force applied between the bridge 621 and the battery cell 100.

Herein, a battery module according to a second embodiment of the present disclosure will be described.

The battery module according to the present embodiment may be configured by differing a detailed structure of the contact member 620 from the battery module according to the first embodiment of the present disclosure described with reference to FIGS. 1 to 10.

Accordingly, in describing the battery module according to the present embodiment, the detailed structure of the contact member 620 different from the battery module according to the first embodiment of the present disclosure will be described with reference to FIGS. 1 to 10. For the remaining components of the battery module according to the present embodiment, the description of the battery module according to the first embodiment of the present disclosure as shown in FIGS. 1 to 10 may be applied.

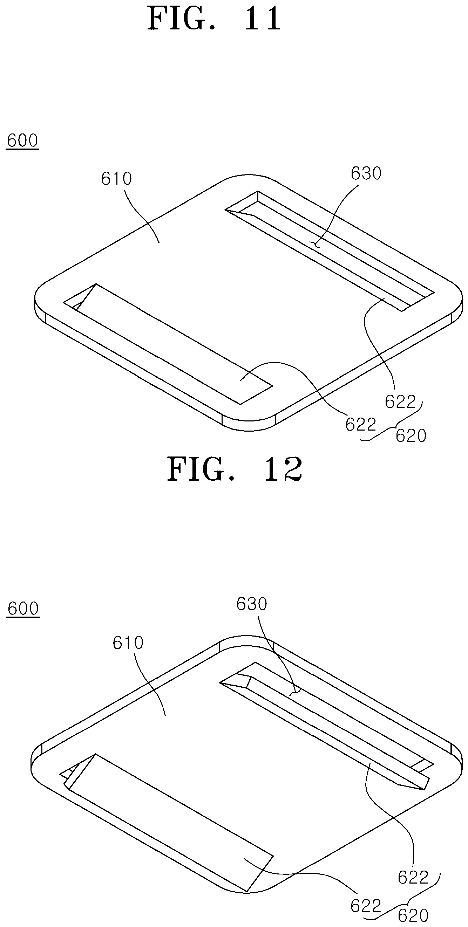

FIG. 11 is a perspective view schematically illustrating a configuration of a contact member according to the second embodiment of the present disclosure, and FIG. 12 is a bottom perspective view schematically illustrating a configuration of the contact member illustrated in FIG. 11.

Referring to FIGS. 11 and 12, a contact member 620 according to the present embodiment may include a flap 622.

The flap 622 may have one end portion connected to a support plate 610, and the other end portion spaced apart from the support plate 610. A side surface of the flap 622 may be separated from the support plate 610. The flap 622 may be disposed to be inclined with respect to the support plate 610. That is, the flap 622 may be formed to have a plate shape extending to be inclined at an angle (e.g., a predetermined angle) downward from the support plate 610. The other end portion of the flap 622 may be in contact with the upper surface of the battery cell 100. The flap 622 may be rotated in a direction toward a slit 630 by a pressing force applied from the pressing member 700, and an area of the flap 622 brought into contact with the upper surface of the battery cell 100 may be gradually increased.

A plurality of flaps 622 may be provided. The plurality of flaps 622 may be disposed to be spaced apart from each other. For example, as shown in FIGS. 11 and 12, the flaps 622 may be formed in a pair, and the pair of flaps 622 may extend to be inclined in different directions from a lower end portion of the support plate 610.

Herein, an operation process of the battery module according to the present embodiment will be described.

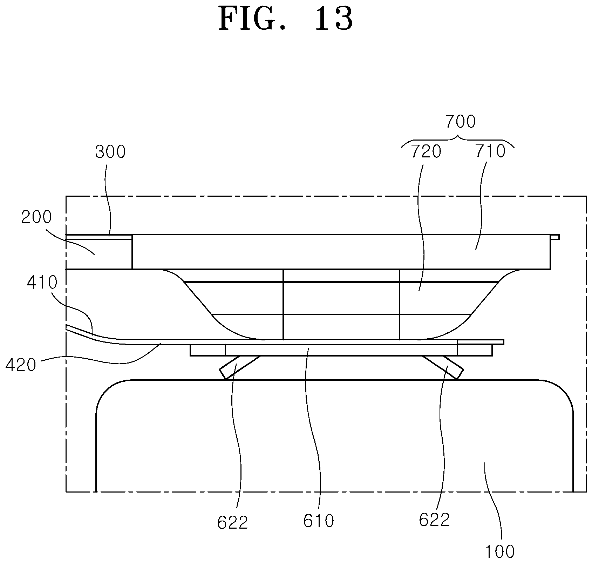

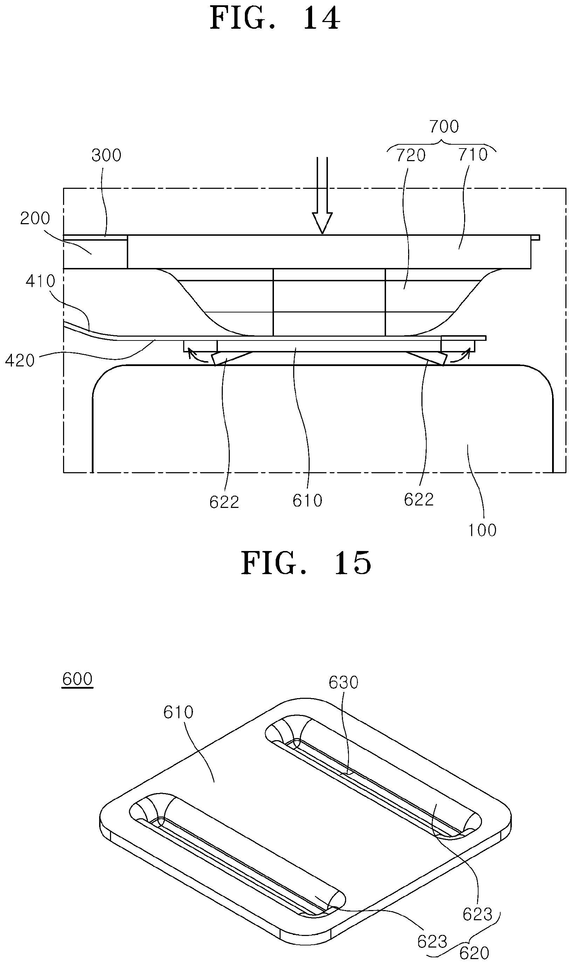

FIGS. 13 and 14 are views schematically illustrating an operation process of the battery module illustrated in FIG. 11.

Referring to FIGS. 13 and 14, after the plurality of battery cells 100 are installed inside the housing body 11, the bus bar holder 200 may be seated on the upper sides of the battery cells 100.

In this process, the mounting part 420 may be inserted in the insertion hole 201, and the other end portion of the flap 622 may be in contact with the upper surface of the battery cell 100.

Thereafter, as the bus bar holder 200 is moved toward the upper surface of the battery cell 100, the end portion of the second pressing body 720 presses the second surface 402 of the mounting part 420 toward the battery cell 100.

A pressing force applied to the mounting part 420 by the second pressing body 720 is transmitted to the flap 622 sequentially via the mounting part 420 and the support plate 610, and the flap 622 is elastically deformed in a direction in which the other end portion thereof faces the slit 630.

As the flap 622 is elastically deformed in a direction in which the other end portion thereof faces the slit 630, an area of the flap 622 in contact with the upper surface of the battery cell 100 may gradually increase.

The flap 622 is elastically deformed and strongly brought into close contact with the upper surface of the battery cell 100 by an accumulated elastic restoring force, and the position of the temperature sensor 510 with respect to the battery cell 100 may be fixed by a frictional force applied between the flap 622 and the battery cell 100.

Herein, a battery module according to a third embodiment of the present disclosure will be described.

The battery module according to the present embodiment may be configured by differing a detailed structure of the contact member 620 from the battery module according to the first embodiment of the present disclosure described with reference to FIGS. 1 to 10.

Accordingly, in describing the battery module according to the present embodiment, the detailed structure of the contact member 620 different from the battery module according to the first embodiment of the present disclosure will be described. For the remaining components of the battery module according to the present embodiment, the description of the battery module according to the first embodiment of the present disclosure as shown in FIGS. 1 to 10 may be applied.

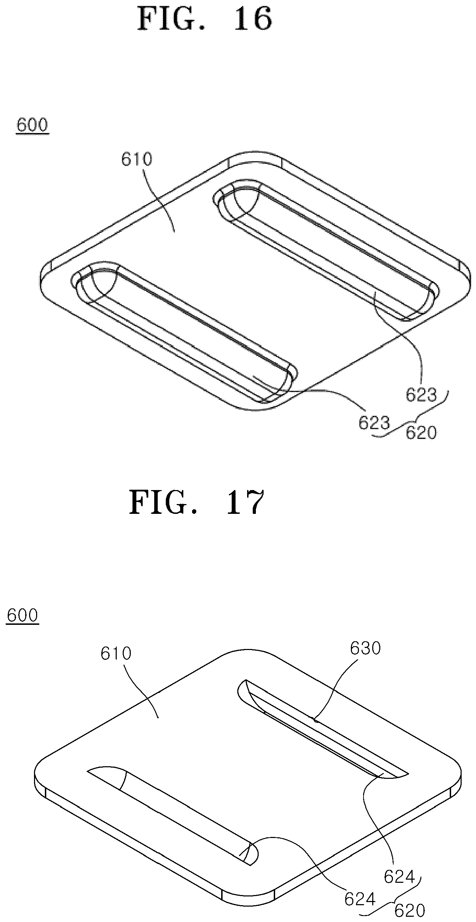

FIG. 15 is a perspective view schematically illustrating a configuration of the contact member according to the third embodiment of the present disclosure, and FIG. 16 is a bottom perspective view schematically illustrating a configuration of the contact member illustrated in FIG. 15.

Referring to FIGS. 15 and 16, a contact member 620 according to the present embodiment may include a contact protrusion 623.

The contact protrusion 623 may convexly protrude toward the upper surface of the battery cell 100 from a lower surface of a support plate 610. An outer surface of the contact protrusion 623 facing the battery cell 100 may have a curved shape. The contact protrusion 623 may extend such that a length direction thereof is parallel to an arrangement direction of the plurality of battery cells 100 or a width direction of the battery cell 100. A lower end portion of the contact protrusion 623 may be in contact with the upper surface of the battery cell 100. The contact protrusion 623 may be formed such that a cross-sectional area thereof gradually decreases toward an end portion thereof, that is, toward the battery cell 100. Accordingly, the contact protrusion 623 may further enhance adhesion with the battery cell 100.

Herein, a battery module according to a fourth embodiment of the present disclosure will be described.

The battery module according to the present embodiment may be configured by differing a detailed structure of the contact member 620 from the battery module according to the first embodiment of the present disclosure described with reference to FIGS. 1 to 10.

Accordingly, in describing the battery module according to the present embodiment, the detailed structure of the contact member 620 different from the battery module according to the first embodiment of the present disclosure shown in FIGS. 1 to 10 will be described. For the remaining components of the battery module according to the present embodiment, the description of the battery module according to the first embodiment of the present disclosure shown in FIGS. 1 to 10 may be applied.

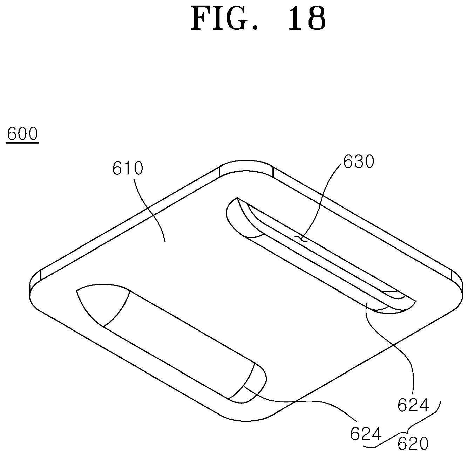

FIG. 17 is a perspective view schematically illustrating a configuration of the contact member according to the fourth embodiment of the present disclosure, and FIG. 18 is a bottom perspective view schematically illustrating a configuration of the contact member illustrated in FIG. 17.

Referring to FIGS. 17 and 18, a contact member 620 according to the present embodiment may include a louver 624.

The louver 624 may convexly protrude toward the upper surface of the battery cell 100 from a lower surface of a support plate 610. A first side of an outer surface of the louver 624 facing the battery cell 100 may have a curved shape. A second side of the outer surface of the louver 624 facing the battery cell 100 may be formed to be open. Accordingly, the louver 624 may further improve a measurement accuracy of the temperature sensor 510 by preventing or substantially preventing air in an interior space from overheating. The louver 624 may extend such that a length direction thereof is parallel to the arrangement direction of the plurality of battery cells 100 or the width direction of the battery cell 100. A lower end portion of the louver 624 may be in contact with the upper surface of the battery cell 100. The louver 624 may be formed such that a cross-sectional area thereof gradually decreases toward an end portion thereof, that is, toward the battery cell 100. Accordingly, the louver 624 may further enhance adhesion with the battery cell 100.

Although the present disclosure has been described with reference to the example embodiments shown in the drawings, it is to be understood that these are merely examples and various modifications and equivalents thereof can be made by one of ordinary skill in the art.

Accordingly, the scope of protection of the present disclosure should be defined by the appended claims.

## Claims

1. A battery module comprising:
a battery cell (100);
a bus bar holder (200) disposed to face the battery cell (100);
a first substrate (300) seated on the bus bar holder (200);
a second substrate (400) extending from the first substrate (300), and comprising a first surface (401) facing the battery cell (100) and a second surface (402) opposite to the first surface (401);
a detection member (500) installed on the second surface (402) and configured to detect a temperature of the battery cell (100);
a support member (600) installed on the first surface (401) and in contact with the battery cell (100); and
a pressing member (700) connected to the bus bar holder (200) and configured to press the support member (600) toward the battery cell (100).

2. The battery module of claim 1, wherein the second substrate (400) is a flexible printed circuit board.

3. The battery module of claim 1 or 2, wherein the second substrate (400) is provided in plural, and
the plural second substrates (400) are arranged in a length direction of the first substrate (300).

4. The battery module of any one of the preceding claims, wherein the second substrate (400) comprises:
an extension part (410) of which a first side is connected to the first substrate (300) and a second side protrudes to an outside of the first substrate (300); and
a mounting part (420) connected to the second side of the extension part (410) and configured to support the detection member (500) and the support member (600).

5. The battery module of claim 4, wherein the bus bar holder (200) comprises an insertion hole (201), and
the mounting part (420) is inserted in the insertion hole (201).

6. The battery module of any one of the preceding claims, wherein the detection member (500) comprises:
a temperature sensor (510) fixed to the second surface (402); and
a coating layer (520) surrounding the temperature sensor (510).

7. The battery module of any one of the preceding claims, wherein the support member (600) comprises:
a support plate (610) fixed to the first surface (401); and
a contact member (620) protruding from the support plate (610) toward the battery cell (100) and in contact with the battery cell (100).

8. The battery module of claim 7, wherein the contact member (620) is elastically deformable.

9. The battery module of claim 7 or 8, wherein the contact member (620) comprises one or more bridges (621) each comprising end portions connected to the support plate (610) and a central portion spaced apart from the support plate (610).

10. The battery module of claim 9, wherein a side surface of the bridge (621) is separated from the support plate (610).

11. The battery module of any one of claims 7 or 8, wherein the contact member (620) comprises one or more flaps (622) each comprising a first end portion connected to the support plate (610) and a second end portion spaced apart from the support plate (610), wherein optionally each of the flaps (622) is inclined with respect to the support plate (610).

12. The battery module of any one of claims 7 to 11, wherein the contact member (620) comprises one or more contact protrusions (623) each comprising a curved outer surface.

13. The battery module of any one of claims 7 to 12, wherein the contact member (620) comprises one or more louvers (624) each comprising a surface having a curved shape and another surface being open.

14. The battery module of any one of claims 7 to 13, wherein the support member (600) further comprises a slit (630) extending through the support plate (610) and disposed to face the contact member (620).

15. The battery module of any one of the preceding claims, wherein the pressing member (700) comprises:
a first pressing body (710) fixed to the bus bar holder (200);
a second pressing body (720) extending from the first pressing body (710) and comprising an end portion in contact with the second surface (402); and
a receiving hole (730) extending through the end portion of the second pressing body (720) and in which the detection member (500) is inserted.
